# FASCICULE DE BREVET EUROPEEN

(11) **EP 1 359 716 B1**
(45) Date de publication et mention de la délivrance du brevet: **13.01.2010**
(21) Numéro de dépôt: 03101058.0
(22) Date de dépôt: 17.04.2003
(51) Int. Cl.: H04L 12/56

(54) **Procédé d'adaptation du protocole de routage OSPF au réseau radio**
Verfahren zur Anpassung vom OSPF Leitweglenkungsprotokoll an ein Funknetz
Method for adapting the ospf routing protocol to the radio network

(30) Priorité: 30.04.2002 FR 0205448
(43) Date de publication de la demande: 05.11.2003
(73) Titulaire: Thales, 92200 Neuilly Sur Seine (FR)
(72) Inventeur: Jacquemin, David, 94117 Arcueil Cedex (FR); Schmitt, Franck, 94117 Arcueil Cedex (FR)
(74) Mandataire: Dudouit, Isabelle

(56) Documents cités:
- WO-A-01/37483
- MOY J: "OSPF Version 2 (Std. 54)" RFC 2328, avril 1998 (1998-04), XP002175571 Extrait de l'Internet: <URL:http://www.faqs.org/rfcs/std/std54.ht ml> [extrait le 2001-08-22]

## Description

L'invention concerne notamment un procédé permettant d'adapter le protocole de routage OSPF (Open Shortest path First) aux spécificités des réseaux radio bas débit ou VHF (Very High Frequency).

Le protocole de routage proposé désigné par CBLS (Constraint Base Link State) dans la suite de la description.

Il est utilisé notamment sur des réseaux à diffusion. Il met par exemple en oeuvre le mode multicast pour transmettre les informations de routage à travers un réseau.

Il est connu d'utiliser le protocole OSPF dans un réseau d'interconnexion IP (Internet Protocol) dynamique à chemins d'accès multiples, grands ou très grands. Le protocole OSPF est décrit dans le document Moy, J, « OSPF Version 2 (Std 54), RFC 2328, avril 1998.

Toutefois, les performances de ce protocole deviennent insuffisantes en terme de convergence et en terme de charge de réseau, lorsqu'il est utilisé sur une interconnexion de réseaux radio bas débit.

WO 01/37483 décrit l'utilisation du protocole OSPF dans un réseau sans fil.

L'objet de l'invention concerne notamment un protocole de routage dénommé CBLS, compatible avec le protocole OSPF et pouvant fonctionner dans un réseau VHF. Il utilise par exemple le mode multicast pour envoyer les informations de routage à travers un réseau.

L'invention concerne un procédé de routage de messages entre plusieurs réseaux radio, un réseau radio comportant au moins un ou plusieurs routeurs et un routeur désigné, chaque routeur comportant une base de données. Il est **caractérisé en ce qu**'il comporte au moins les étapes suivantes :
➢ Un routeur d'un réseau radio envoie un message Hello afin de rechercher ses différents voisins,
➢ Au niveau de la majorité de réseaux radio, chaque routeur transmet une requête Rr au routeur désigné du réseau radio,
➢ Le routeur désigné répond en envoyant le contenu de sa base de données sous forme d'un message Link State (LS) Update à tous ou à la majorité des routeurs du réseau radio,
➢ Chaque routeur connaissant ses voisins, et à la réception du message LS Update envoyé du routeur designé, compare les informations contenues dans le message LS Update au contenu de sa base de données et transmet en multicast, à tous les autres routeurs du réseau, le contenu de sa base de données sous forme d'un autre message LS Update afin de synchroniser l'ensemble de ses voisins, et le routeur désigné acquitte cet autre message.

Le réseau radio est par exemple de type réseau à diffusion, NBMA ou encore réseau point à multipoint.

L'objet de la présente invention présente notamment les avantages suivants :
➢ Il est compatible avec le protocole de routage OSPF et permet d'améliorer notablement les performances de ce protocole sur la voie radio,
➢ Il permet de limiter la quantité d'informations à transmettre sur les réseaux radio, par exemple diminuer la charge sur le réseau,
➢ Il réduit le temps de convergence en accélérant les phases critiques du protocole OSPF.

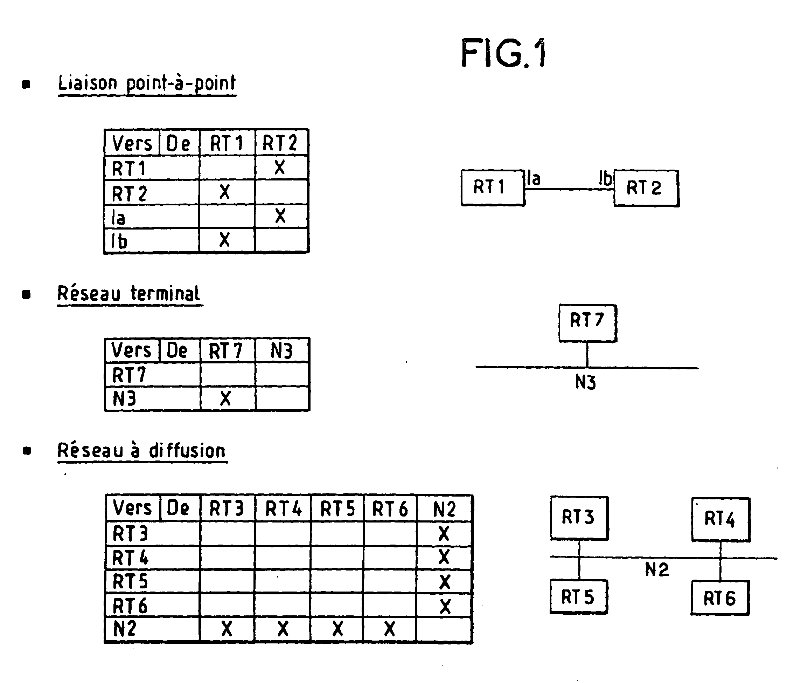

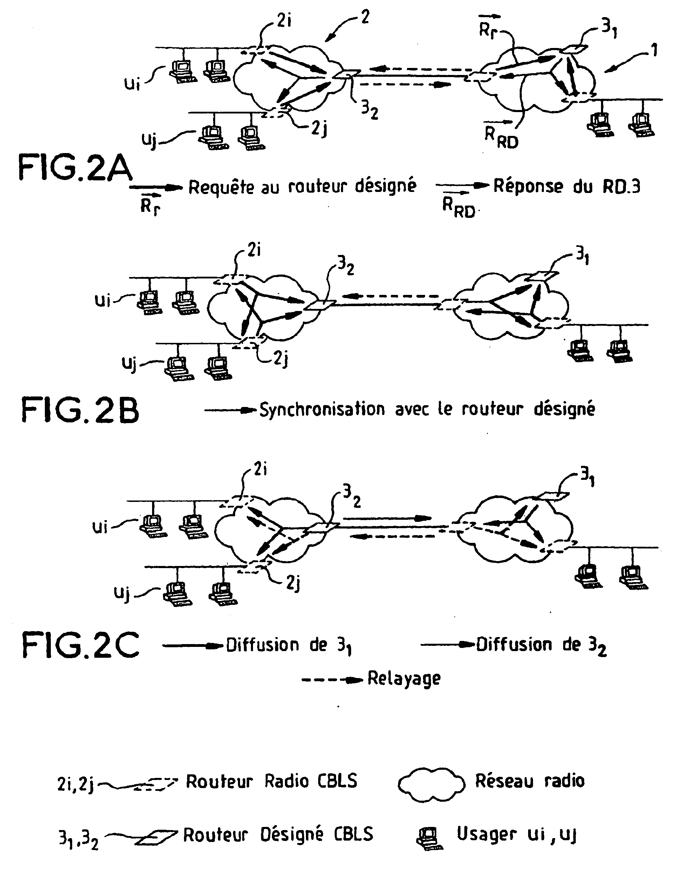

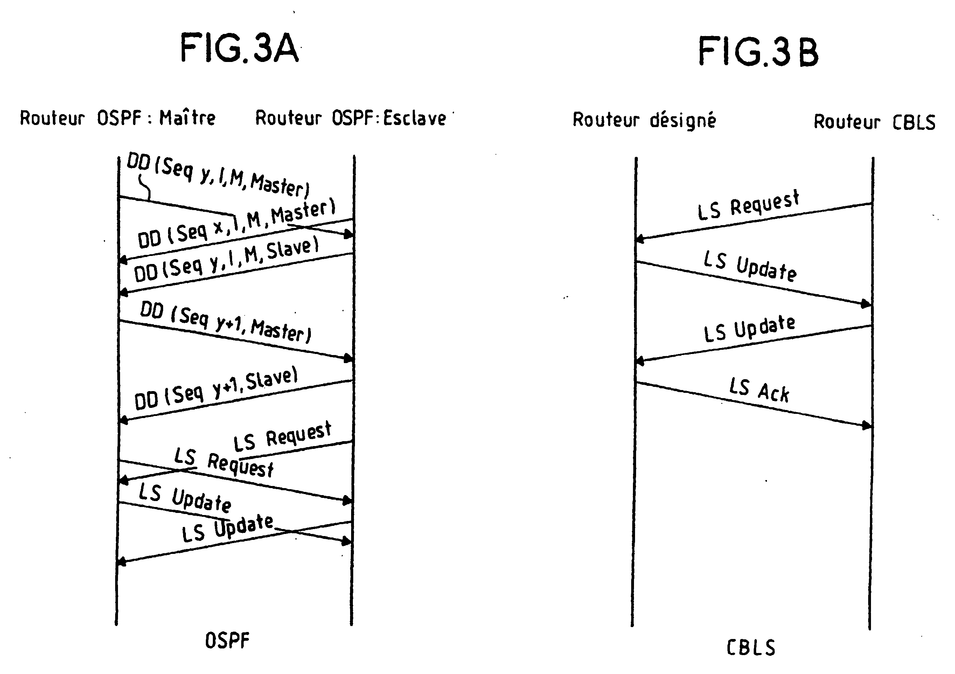

D'autres caractéristiques et avantages du procédé de routage et du routeur associé selon l'invention apparaîtront mieux à la lecture de la description qui suit, donnée à titre illustratif et nullement limitatif annexée des figures qui représentent :
➢ La figure 1 différentes représentations pour une interface,
➢ Les figures 2A, 2B et 2C un exemple d'échanges d'information dans un système selon l'invention,
➢ Les figures 3A et 3B les mécanismes de synchronisation des bases de données pour le protocole OSPF et pour le protocole CBLS selon l'invention,
➢ Les figues 4A et 4B le mécanisme d'inondation dans le cas du protocole OSPF et du protocole selon l'invention CBLS.

La description qui suit donnée à titre illustratif et nullement limitatif concerne un procédé de routage de messages au sein d'un ensemble de réseaux radio.

### La base de données d'état de liens

La base de données décrit la topologie du Système Autonome SA comme un graphe orienté, avec les routeurs et les réseaux en sommet, et les liens point à point en arc. Chaque entrée dans la base LSA décrit le voisinage d'un routeur. Ce voisinage dépend, par exemple, du type de réseau auquel est reliée l'interface du routeur et du nombre de routeurs connectés à cette interface.

Le protocole CBLS selon l'invention permet trois exemples de représentations pour une interface (la référence X dans les tableaux de la figure 1 représente la distance associée à la liaison). Rti désigne un routeur. Le protocole CBLS selon l'invention les intègre à sa base de données de la manière suivante :
➢ Les hôtes sont représentés comme des réseaux terminaux,
➢ Les réseaux sans capacité de diffusion et dont les routeurs sont tous directement interconnectés sont modélisés comme des réseaux à diffusion,
➢ Les réseaux sans capacité de diffusion et dont les routeurs ne sont pas tous directement interconnectés sont modélisés par des liaisons point à point.

A chaque réseau du graphe, on associe une adresse IP et un masque. Pour les réseaux à diffusion ou modélisés comme tels, un routeur désigné (RD) est élu pour prendre en charge les échanges d'information de routage pour le réseau.

La base de données utilisée dans le procédé selon l'invention est identique ou sensiblement identique à celle du protocole OSPF. Ceci confère notamment comme avantage d'offrir une compatibilité entre les deux protocoles.

### Informations externes au SA (Svstème autonome )

Lorsque l'arbre de plus court chemin a été créé, les informations de routage externe sont examinées. Le processus qui met en oeuvre la procédure de calcul de l'arbre de plus court chemin consulte les informations externes au protocole afin de pouvoir les prendre en compte. Ces informations proviennent, par exemple, d'un protocole de routage externe ou encore sont configurées statiquement. Elles sont classées suivant le type de la métrique utilisée : si la métrique est celle du protocole CBLS, alors ces informations sont de type 1, sinon elles sont de type 2. Lors du routage inter SA (Système autonome), les routes associées à une métrique de type 1 sont toujours préférées aux routes associées à une métrique de type 2.

### Les zones CBLS

Le protocole CBLS selon l'invention permet de définir différentes zones à l'intérieur d'un SA.

Une zone correspond, par exemple, à un groupe contigu de réseaux et d'hôtes. Chaque zone possède sa propre base de données d'état de liens et ne connaît pas la topologie entière du SA. La topologie détaillée d'une zone est invisible au reste du SA. Ainsi, à l'intérieur d'un SA, tous les routeurs n'ont plus la même base de données. La découpe en zone introduit un routage intra zone et un routage inter zone :
➢ Pour le routage intra zone, seules les informations internes à la zone sont utilisées,
➢ Pour le routage inter zone, des informations externes à la zone sont utilisées. Les routeurs inter zone s'échangent des informations concernant la composition des différentes zones et les propagent à l'intérieur de leur zone respective.

Les différentes zones sont par exemple configurées en étoile. Il existe une zone centrale, appelée zone backbone, à laquelle toutes les autres zones sont connectées. Cette zone Backbone contient, par exemple, tous les routeurs inter zone. Elle a notamment pour mission d'assurer le routage inter zone et de propager les informations relatives à une zone vers les autres zones du SA. Lorsqu'un routeur inter zone reçoit des informations en provenance d'une autre zone, il la diffuse à l'intérieur des zones auxquelles il est connecté.

Cette découpe en zone et en SA permet notamment de distinguer quatre sortes de routeur selon leur emplacement :
1 - Routeur interne : ce sont les routeurs qui sont connectés à une seule zone. Il possède une seule base de données.
2 - Routeur inter zone : ce sont les routeurs qui sont connectés à plusieurs zones. Ils possèdent une base de données par zone. Un routeur inter zone résume les informations topologiques des zones auxquelles ils sont reliés pour les transmettre à la zone Backbone.
3 - Routeur Backbone : ce sont des routeurs qui possèdent une interface reliée au Backbone. Tous les routeurs inter zones sont des routeurs Backbone.
4 - Routeur externe : ce sont les routeurs qui sont connectés à un autre SA. Cette classification est indépendante des trois autres.

Pour permettre une gestion efficace du routage, la découpe en zone est associée à une gestion de masque des sous-réseaux. A chaque route est associé un masque qui autorise l'agrégation de plusieurs groupes d'adresses pour une seule route.

Les figures 2A, 2B et 2C schématisent un exemple d'échanges d'informations entre deux réseaux radio.

Un réseau radio 1 comporte par exemple deux routeurs 2i, 2j auxquels sont reliés plusieurs usagers ui, uj, ainsi qu'un routeur désigné RD, 3₁. La figure indique un second radio 2 comportant aussi un routeur désigné 3₂, deux routeurs 2i, 2j reliés à des usagers.

Le procédé exécute par exemple les étapes suivantes :
- Au niveau de chaque réseau, par exemple, chacun des routeurs 2i, 2j, envoie une requête désignée par la flèche Rr au routeur désigné RD ou 3₁, 3₂. Celui-ci centralise les requêtes avant de répondre en envoyant le contenu de sa base de données à tous les routeurs, flèche R_{RD}, figure 2A,
- après la réception du message du routeur désigné 3₁, 3₂ : chaque routeur du réseau 2i, 2j multicast (envoie dans toutes les directions) le contenu de la base de données afin de synchroniser l'ensemble de ces voisins, figure 2B,
- un routeur (2i, 2j) d'un réseau radio ayant reçu le contenu de la base de données, envoie un message Hello afin de rechercher ses différents voisins. Ce message Hello est par exemple diffusé périodiquement.
- après la synchronisation locale, chaque routeur désigné 3₁, 3₂ d'un réseau radio 1, respectivement 2 diffuse les informations locales relatives à son réseau, aux autres réseaux, figure 2C. Ces informations sont relayées à travers la totalité du réseau. Les échanges s'effectuent entre les routeurs par exemple. Le réseau dépend de la configuration mis en oeuvre avec les frontières suivantes :

- Si aucune zone n'est mise en place, le réseau comprend tout le SA.
- Si des zones sont définies, la diffusion diffère selon le type de LSA.

Elle peut être limitée à la zone d'appartenance du routeur ou sinon au SA.

Les flèches indiquées en pointillés sur la figure correspondent au relayage.

Le protocole CBLS mis en oeuvre dans le procédé selon l'invention comprend par exemple les étapes décrites ci-après.

Dans une première étape, au démarrage, un routeur initialise les structures nécessaires à la mise en oeuvre du protocole. Ces structures sont, par exemple, celles qui permettent de stocker la base de données d'états de liens, les informations en provenance d'autre protocole de routage, les tables de routage, les informations de configuration statiques. Le routeur attend ensuite la mise en fonctionnement de ses interfaces vers ses différents voisins. Généralement, à chaque liaison physique du routeur on associe une ou plusieurs interfaces, selon des règles connues de l'Homme du métier.

Dans un deuxième temps, un routeur 2i, 2j, utilise, par exemple, le protocole Hello pour connaître ses différents voisins. Un routeur d'un réseau envoie donc des messages Hello à tous ses voisins qui sont directement joignables en un bond IP et reçoit, en retour, les messages Hello de ces voisins. Si le routeur est connecté à un réseau radio et à un réseau Ethernet, ses voisins sont tous les routeurs joignables directement à travers le réseau radio et à travers le réseau Ethernet. Sur les réseaux à diffusion et les liaisons point-à-point, le routeur détecte ses voisins, par exemple de manière dynamique, en envoyant des messages Hello, à l'adresse multicast All Ospf/ Routeurs. Sur les autres réseaux, une configuration manuelle est par exemple utilisée pour permettre cette découverte. Pour les réseaux à diffusion, le protocole Hello permet aussi l'élection du routeur désigné, RD ou 3i.

Une fois terminée l'étape de découverte des voisins, un routeur du réseau essaye d'établir des relations d'adjacence avec ses nouveaux voisins. Les bases de données des routeurs et une partie de ses voisins, en l'occurrence ses voisins qui lui sont adjacents, sont alors synchronisées entre paires de routeurs adjacents. Les relations d'adjacence sont notamment utilisées dans le processus de diffusion du protocole pour réduire le flux d'information à travers le réseau. Pour un réseau à diffusion, c'est le routeur désigné qui détermine les différentes relations d'adjacence.

Un routeur envoie périodiquement, par exemple, des messages Hello pour garder sa connectivité avec ses voisins. Il transmet aussi, périodiquement, l'état de sa base de données aux autres routeurs de la zone à travers des LSA. Ces messages sont aussi diffusés lors du changement de l'état de la base de données du routeur. Les LSA sont par exemple diffusés à travers la zone CBLS à laquelle le routeur appartient, grâce à un algorithme de diffusion qui assure que tous les routeurs de la zone possèdent la même base de données. Une fois la base de données mise à jour, les routeurs calculent l'arbre de plus court chemin puis remplissent leur table de routage.

### Le routage inter zone

Dans le cas d'un routeur inter zone, ce dernier résume la topologie des zones auxquelles il est connecté à l'exception de la zone Backbone. Ce résumé est alors transmis au Backbone qui le diffuse vers les autres routeurs inter zone du SA. Chaque routeur inter zone reçoit donc les messages de tous les autres routeurs inter zone du SA. Un routeur inter zone possède donc les informations sur la topologie complète du Backbone et un résumé de la topologie des autres zones. A partir de ces informations de topologie, le routeur calcule les chemins relatifs à toutes les destinations inter zone. Ces informations permettent à chaque routeur interne de router les paquets à destination des autres zones.

### Le routage inter SA

Pour les routeurs qui possèdent des informations à propos des autres systèmes autonomes, ils peuvent les diffuser à travers le SA. Ces informations obtenues, soit statiquement, soit grâce à un EPG (abréviation de Exterior Gateway Protocol) sont diffusées telles quelles à travers le SA. Dans cet exemple de réalisation, les réseaux représentés font partie du même SA.

Pour que ces informations puissent être utilisées sur les routeurs du SA, la connaissance des routeurs externes est demandée. Pour cette raison, les routeurs inter zone diffusent aussi l'emplacement des routeurs externes.

### Les messages

Pour fonctionner, le protocole mis en oeuvre dans le procédé selon l'invention utilise par exemple quatre types de message. Ces messages sont envoyés directement en IP par exemple. Il est aussi possible d'utiliser la fragmentation IP. Tous les messages CBLS partagent, par exemple, un en-tête commun de 20 octets.

Les quatre types de message peuvent être les suivants :

| Type | Nom | Fonction |
|---|---|---|
| 1 | Hello | Découverte des voisins et maintenance de la connectivité |
| 2 | Link State Request | Demande de chargement de la base de données |
| 3 | Link State Update | Mise à jour de la base de données |
| 4 | Link State Ack | Acquittement d'une mise à jour |

➢ Les messages Hello sont utilisés lors de la découverte des voisins et de l'élection du RD (routeur désigné). Ils servent aussi à maintenir l'état de connectivité entre les voisins.
➢ Les messages Link State Request sont utilisés lors de la synchronisation des bases de données entre deux routeurs adjacents.
➢ Les messages Link State Update et Link State Ack servent à l'implémentation du processus fiable d'inondation décrit ci-après.

### Le protocole Hello

Ce protocole est utilisé dans l'étape de la découverte des voisins, de la maintenance des relations entre voisins, de l'assurance de la bidirectionnalité des liaisons et de l'élection du routeur désigné.
Un message Hello contient par exemple :
➢ La liste des voisins dont le routeur a la connaissance pour permettre de juger de la bidirectionalité de la connexion,
➢ La priorité du routeur qui est nécessaire pour l'élection du routeur désigné,
➢ L'identificateur du routeur désigné et du routeur de secours auxquels le routeur est rattaché,
➢ Les différentes constantes du protocole CBLS selon l'invention. Ces constantes sont par exemple les suivantes : Hello Interval, Router Dead Interval, Retransmission Interval, Sequence Interval, Request Interval.

Pour assurer la connectivité entre les membres du réseau, les messages Hello sont envoyés périodiquement, par exemple, sur toutes les interfaces de sortie du routeur.

Si un routeur ne reçoit pas de message Hello de la part d'un de ses voisins pendant une période de « Router Dead Interval », alors il décide que le voisin en question ne fait plus partie du réseau. Le protocole Hello fonctionne différemment selon le type de réseau par exemple :
➢ Pour un réseau à diffusion, le mode multicast est utilisé pour l'envoi des messages Hello. Ceci permet la découverte automatique des voisins et l'élection du routeur désigné.
➢ Pour un réseau NBMA: (abréviation de Non-Broadcast Multi-Access), une configuration manuelle est mise en oeuvre pour la découverte des voisins et l'élection du routeur désigné. Chaque routeur du réseau qui peut être potentiellement élu possède, par exemple, la liste de tous les autres routeurs attachés au réseau. Ces routeurs envoient alors des messages Hello à tous les autres routeurs candidats, afin de provoquer l'élection. Lorsque le routeur désigné est élu, il envoie alors un message Hello à tous les autres routeurs de réseaux pour indiquer la fin du processus d'élection.
➢ Pour un réseau point à multipoint ; un routeur envoie un message Hello à tous les autres routeurs avec lesquels il peut communiquer. Les voisins peuvent être découverts dynamiquement grâce à un protocole de type inverse ARP (Adress Resolution Protocol) ou par configuration.

### La synchronisation de la base de données

Un protocole de routage à état de liens requiert la synchronisation des bases de données de tous les routeurs. Contrairement au protocole OSPF où la synchronisation s'effectue en point à point, la plupart des échanges d'informations de routage pour le protocole selon l'invention CBLS s'effectue en utilisant le mode multicast.

Après la découverte des voisins et l'élection du routeur désigné, chaque routeur (hormis le routeur désigné) envoie un message LS Request, en mode unicast, à destination du routeur désigné. Ce message est destiné à initialiser l'échange des bases de données en forçant le routeur désigné à envoyer le contenu de sa base de données. Si aucune réponse de la part du routeur désigné n'est arrivée après une attente de Retransmission Interval, alors un nouveau message LS Request est envoyé au routeur désigné.

A la réception du premier message LS Request, le routeur désigné attend un délai de Request Interval durant lequel il ignore tous les autres messages LS Request. Lorsque ce délai expire, le routeur désigné diffuse le contenu de sa base de données à tous les routeurs du réseau en envoyant un message LS Update à l'adresse AllOspfRouter.

Chaque routeur, à la réception du message du routeur désigné (correspondant au contenu de sa base de données), compare les informations contenues dans le message avec les informations contenues dans sa base de données et envoie un message LS Update en multicast. Le routeur désigné acquitte ce message. Pour assurer la synchronisation des routeurs du réseau, chaque routeur envoie un message LS Update en multicast à destination de l'adresse AllOspfRouter contenant les informations existantes dans la base de données et non présentes dans le message. Puis, le routeur inclut dans sa base de données les informations contenues dans le message. Le message LS Update ainsi envoyé est par exemple explicitement acquitté par le routeur désigné à l'aide d'un message LS Ack. Si l'acquittement n'est pas parvenu au routeur après un délai de Retransmission Interval alors le message est réémis.

Lorsque le routeur désigné reçoit un LS Update, il envoie le message LS Ack à destination de l'émetteur du message. Ce message sert d'acquittement. Le routeur désigné étant au centre du processus de synchronisation, il acquitte les messages LS Update pour avoir la base de données la plus à jour possible.

Les figures 3A et 3B résument respectivement le mécanisme de synchronisation des bases de données dans le cas du protocole OSPF et pour le protocole CBLS selon l'invention.

On remarque que le nombre de messages échangés lors du processus CBLS est nettement inférieur par rapport à l'OSPF. De cette façon, le protocole selon l'invention contribue à diminuer le nombre d'accès au canal radio ce qui constitue une performance.

D'autre part, l'utilisation du multicast pour tous les messages LS Update permet de limiter la présence d'information redondante sur le réseau. Dans le cas du protocole OSPF, la synchronisation étant un mécanisme utilisant uniquement le multi-point, de nombreuses informations sont envoyées plusieurs fois sur le réseau, ce qui réduit l'efficacité du protocole.

### Le routeur désigné

Le routeur désigné dans un réseau radio a notamment les rôles suivants :
➢ Il est à l'origine des messages de routage (Link State Update) qui listent la topologie du réseau pour lequel il est le routeur désigné,
➢ Il est le routeur de référence dans le processus de synchronisation,
➢ C'est le seul routeur du réseau dont la base de données est continuellement à jour,
➢ C'est le seul routeur qui acquitte les messages.

Il joue ainsi un rôle dans les phases essentielles du protocole CBLS selon l'invention.

### Link State Advertisement (LSA)

Les LSA sont les entités qui décrivent l'état des liens de la topologie d'un SA dans la base de données. Il existe quatre types de LSA :
1 - routeur LSA : ils décrivent l'état des différentes interfaces d'un routeur,
2 - Network LSA ; ils décrivent l'ensemble de routeurs attachés à un réseau ;
3 - Summary LSA ; ils décrivent les routes inter zones et permettent l'agrégation d'adresses au routeur inter zone. Il en existe, par exemple, deux types. Les premiers résument les routes dont les destinations sont externes au SA. Les seconds résument les routes vers les routeurs inter SA.
4 - AS-External LSA : ils décrivent les routes dont les destinations sont externes au SA.

Tous les LSA possèdent un en-tête identique qui contient entre autre les champs suivants :
➢ LS age ; c'est l'âge du LSA exprimé en secondes. Cette valeur est incrémentée du délai de transmission, à chaque transmission, et du temps de séjour dans un routeur,
➢ LS sequence number : ce nombre est utilisé pour repérer les vieux LSA et les doublons

Un LSA est ajouté à la base de données d'un routeur quand :
➢ Il est reçu lors du mécanisme d'inondation,
➢ Il est généré par le routeur lui-même,

Un LSA est supprimé de la base de données d'un routeur quand :
➢ Il est remplacé par un LSA plus récent reçu lors du mécanisme d'inondation,
➢ Il est remplacé par un LSA plus récent généré par le routeur lui-même,
➢ Il a dépassé l'âge maximal.

Chaque routeur maintient pour chaque interface la liste des différents LSA à envoyer aux différents voisins.

Chaque routeur peut être à l'origine de un ou de plusieurs LSA. Chaque routeur crée par exemple un Routeur LSA pour décrire chacune de ses interfaces, par exemple les caractéristiques physiques de l'interface configurées statiquement ainsi que les différentes variables du protocole appliquées à cette interface. Un routeur désigné crée un Network LSA pour chaque réseau dont il est routeur désigné. Un routeur inter zone crée un Summary SA pour chaque zone à laquelle il appartient. Un routeur inter SA crée un AS-External LSA pour chaque SA.

Certains évènements peuvent être à l'origine de la création d'un nouveau LSA, par exemple :
1 - L'âge d'un LSA créé par le routeur vient d'atteindre la valeur de rafraîchissement. Dans ce cas, une nouvelle instance du LSA est créée même si aucun changement n'est apparu. Ce mécanisme améliore la robustesse du protocole,
2 - L'état d'une interface change. Une nouvelle instance du Routeur LSA peut être créée,
3 - Le routeur désigné d'un réseau auquel est attaché le routeur change. Un nouveau routeur LSA est alors créé. De plus, si le routeur est le nouveau routeur désigné alors il crée un Network LSA. Si le routeur était l'ancien routeur désigné, tous les Network LSA créés par ce routeur sont éliminés,
4 - L'état d'un voisin change. Une nouvelle instance du Routeur LSA est par exemple créée.
   Pour les routeurs inter zones, les événements suivants peuvent apparaître :
5 - Une route intra zone est créée, modifiée ou supprimée dans la table de routage. Le routeur crée un Summary LSA pour cette route dans chaque zone à laquelle il est attaché,
6 - Une route inter zone est créée, modifiée ou supprimée dans la table de routage. Le routeur crée une Summary LSA pour cette route dans chaque zone à laquelle il est attaché, sauf la zone Backbone,
7 - Le routeur appartient à une nouvelle zone. Le routeur doit créer un nouveau Summary LSA qui résume sa table de routage pour la nouvelle zone,
8 - La modification d'un lien virtuel entraîne par exemple la création d'un nouveau Routeur LSA pour le réseau de transit,

Pour les routeurs inter SA,
9 - Une route externe obtenue par un EGP est modifiée. Une nouvelle instance d'un AS-External LSA peut être créée,
10 - Le routeur cesse d'être un routeur inter SA. Les AS-External LSA sont alors supprimés.

### Le processus d'inondation

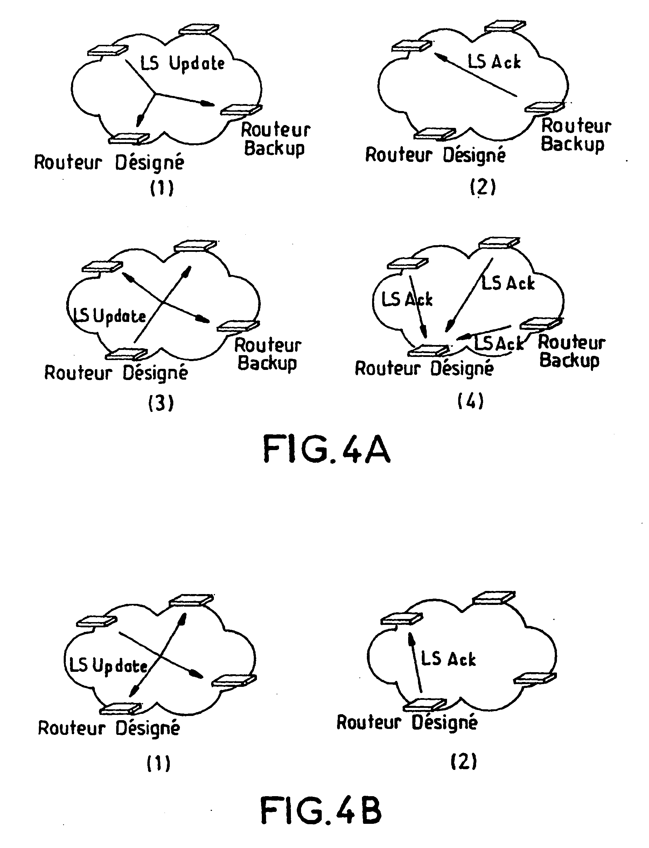

Le mécanisme d'inondation est par exemple réalisé par l'envoi de paquets Link State Update de proche en proche, de routeur en routeur. Chaque paquet peut contenir un ou plusieurs LSA. Il présente comme avantage, de décentraliser l'envoi des paquets et de transmettre directement les informations à tous les routeurs du réseau sans passer par le routeur désigné. Le fonctionnement de ce mécanisme est représenté à la figure 4B, la figure 4A représentant le protocole habituellement utilisé dans le cas de l'OSPF. On remarque bien le rôle central du routeur désigné à la figure 4A et la décentralisation à la figure 4B.

Ce mécanisme peut aussi être fiabilisé en deux phases décrites ci-après.

Le processus d'inondation se met en place dès que le routeur reçoit un paquet Link State Update de proche en proche. Le routeur parcourt les différents LSA contenus dans le message et installe les nouveaux et les plus récents dans sa base de données. Selon le type de LSA ajouté ou modifié dans la base, le routeur recalcule sa table de routage (calcul complet de la table si Router ou Network LSA, calcul des routes inter zone ou inter SA si Summary ou AS-External LSA).

Chaque modification de la base de données, qu'elle soit due à la réception d'un Link State Update ou à la création d'un LSA par le routeur lui-même est, par exemple, transmise sur les différentes interfaces de sorties du routeur pour assurer la synchronisation de la base de données de tous les routeurs du réseau. Chaque routeur maintient une liste des différents LSA qu'il doit envoyer sur chaque interface.

Le routeur choisit les interfaces de sortie sur lesquelles il est susceptible de devoir envoyer un message de mise à jour et il examine, ces sorties, une par une, pour savoir si cet envoi est nécessaire ou non. Cet ensemble d'interface de sortie dépend du type de LSA à diffuser :
➢ AS-External LSA ; ils doivent être diffusés à travers tout le SA. Ainsi, toutes les interfaces du routeur doivent être testées,
➢ Tous les autres LSA ; ils doivent être uniquement diffusés à l'intérieur de la zone dont ils décrivent les liens. Ainsi, toutes les interfaces appartenant à la zone du LSA vont être testées.

Une fois que le routeur a déterminé l'ensemble des interfaces qu'il devait tester, il exécute l'algorithme suivant sur chacun d'elle :
➢ Si l'interface est l'interface de réception du message, alors le procédé passe à l'interface suivante,
➢ Si sur l'interface, la phase de synchronisation n'est pas encore terminée et que le message LS Update répondant à celui du routeur désigné n'a pas été envoyé, alors on passe à l'interface suivante.

A ce stade, le LSA doit être transmis sur le lien. Un Link State Update contenant le LSA est envoyé sur l'interface. L'âge du LSA doit être incrémenté de la valeur du temps de transmission estimé pour le lien. Le routeur désigné acquitte tous les messages LS Update à l'aide d'un message LS Ack. Si l'acquittement n'est pas reçu après un délai Retransmission Interval, alors le message est par exemple réémis.

Ces échanges peuvent être fiabilisés de la manière suivante :
➢ Par l'acquittement de tous les messages par le routeur désigné associé à la retransmission des messages non acquittés,
➢ Par la présence d'un numéro de séquence dans tous les messages LS Update.

L'acquittement de tous les messages par le routeur désigné permet à celui-ci de posséder en permanence une base de données cohérente. On entend par cohérence, le fait que tous les routeurs d'une zone possèdent la même base de données d'état de liens afin de pouvoir calculer les même routes. Chaque LSA est acquitté séparément par le routeur désigné. Les acquittements sont contenus dans des paquets Link State Acknowledgment. Un tel paquet peut en outre contenir plusieurs acquittements. Cette cohérence de la base de données du routeur désigné permet d'assurer un fonctionnement optimal au processus de synchronisation.

La présence d'un numéro de séquence dans tous les messages LS Update est utilisée par exemple pour permettre aux routeurs de détecter le fait qu'un message ne leur est pas parvenu (message non acquitté). Ce numéro de séquence, propre à chaque routeur, est incrémenté à chaque envoi de message LS Update sur le réseau (hormis pour les retransmissions de message). Chaque routeur peut alors comparer le contenu de sa table avec celle du routeur désigné. Un routeur qui possède un numéro de séquence inférieur au numéro présent dans le message, envoie un message LS Request au routeur désigné contenant la liste des messages perdus. Le routeur désigné, à la réception du message LS Request, diffusera sur le réseau, les messages demandés par la requête, après un délai de Request Interval.
Les constantes prennent par exemple les valeurs suivantes :

| | Réseau VHF | Réseau LAN |
|---|---|---|
| Hello Interval | 50 secondes | 10 secondes |
| Router Dead Interval | 200 secondes | 40 secondes |
| Retransmission Interval | 100 secondes | 5 secondes |
| Sequence Interval | 200 secondes | 40 secondes |
| Request Interval | 10 secondes | 2 secondes |

## Revendications

1. Procédé de routage de messages entre plusieurs réseaux radio, un réseau radio (1) comportant au moins un ou plusieurs routeurs (2i, 2j) et un routeur désigné (RD, 3₁, 3₂), chaque routeur comportant une base de données **caractérisé en ce qu'**il comporte au moins les étapes suivantes :
➢ Un routeur (2i, 2j) d'un réseau radio (1) envoie un message Hello afin de rechercher ses différents voisins,
➢ Au niveau de la majorité de réseaux radio, chaque routeur (2i, 2j) transmet une requête Rr au routeur désigné (RD, 3₁, 3₂) du réseau radio,
➢ Le routeur désigné (RD, 3₁, 3₂) répond en envoyant le contenu de sa base de données sous forme d'un message Link State (LS) Update à tous ou à la majorité des routeurs (2i, 2j) du réseau radio
➢ Chaque routeur (2i, 2j) connaissant ses voisins, et à la réception du message LS Update envoyé du routeur designé, compare les informations contenues dans le message LS Update au contenu de sa base de données et transmet en multicast, à tous les autres routeurs du réseau, le contenu de sa base de données sous forme d'un autre message LS Update afin de synchroniser l'ensemble de ses voisins, et le routeur désigné acquitte cet autre message.

2. Procédé selon la revendication 1 **caractérisé en ce que** après l'étape de synchronisation de l'ensemble des voisins, le routeur désigné diffuse les informations locales aux réseaux extérieurs au sien.

3. Procédé selon la revendication 1 **caractérisé en ce que** le message Hello est diffusé périodiquement.

4. Procédé selon la revendication 1 **caractérisé en ce que** après la découverte de ses voisins, un routeur envoie un message LS request en unicast à destination du routeur désigné, le message étant répété en cas d'absence de réponse après un délai Retransmission Interval donné.

5. Procédé selon l'une des revendications 1 à 4 **caractérisé en ce qu'**il comporte l'acquittement de tous les messages par le routeur désigné et la retransmission des messages non acquittés et/ou la présence d'un numéro de séquence dans tous les messages LS Update.

6. Procédé selon l'une des revendications 1 à 5 **caractérisé en ce que** le réseau radio est de type réseau à diffusion, NBMA ou encore réseau point à multipoint.

## Claims

1. Method for routing messages between a number of radio networks, a radio network (1) comprising at least one or more routers (2i, 2j) and a designated router (RD, 3₁, 3₂), each router comprising a database **characterized in that** it comprises at least the following steps:
➢ a router (2i, 2j) of a radio network (1) sends a Hello message in order to find its various neighbours,
➢ in most radio networks, each router (2i, 2j) transmits a request Rr to the designated router (RD, 3₁, 3₂) of the radio network,
➢ the designated router (RD, 3₁, 3₂) replies by sending the content of its database in the form of a Link State (LS) Update message to all or most of the routers (2i, 2j) of the radio network,
➢ each router (2i, 2j) knowing its neighbours, and on receipt of the LS Update message sent from the designated router, said router compares the information contained in the LS Update message to the content of its database and transmits in multicast mode, to all the other routers of the network, the content of its database in the form of another LS Update message in order to synchronize all of its neighbours, and the designated router acknowledges this other message.

2. Method according to Claim 1, **characterized in that**, after the step for synchronization of all the neighbours, the designated router broadcasts the local information to the networks external to its own.

3. Method according to Claim 1, **characterized in that** the Hello message is broadcast periodically.

4. Method according to Claim 1, **characterized in that**, after the discovery of its neighbours, a router sends an LS Request message in unicast mode to the designated router, the message being repeated if there is no reply after a given Retransmission Interval.

5. Method according to one of Claims 1 to 4, **characterized in that** it comprises the acknowledgement of all the messages by the designated router and the retransmission of the unacknowledged messages and/or the presence of a sequence number in all the LS Update messages.

6. Method according to one of Claims 1 to 5, **characterized in that** the radio network is of broadcast network, NBMA or even point-to-multipoint network type.

## Patentansprüche

1. Verfahren zum Routing von Mitteilungen zwischen mehreren Funknetzen, wobei ein Funknetz (1) mindestens einen oder mehrere Router (2i, 2j) und einen designierten Router (RD, 3₁, 3₂) aufweist, wobei jeder Router eine Datenbank aufweist, **dadurch gekennzeichnet, dass** es mindestens die folgenden Schritte aufweist :
➢ ein Router (2i, 2j) eines Funknetzes (1) sendet eine Hello-Mitteilung, um seine verschiedenen Nachbarn zu suchen,
➢ auf der Ebene der meisten Funknetze überträgt jeder Router (2i, 2j) eine Anfrage Rr an den designierten Router (RD, 3₁, 3₂) des Funknetzes,
➢ der designierte Router (RD, 3₁, ₃₂) antwortet, indem er den Inhalt seiner Datenbank in Form einer Mitteilung LinK State (LS) Update an alle oder die meisten der Router (2i, 2j) des Funknetzes sendet,
➢ jeder seine Nachbarn kennende Router (2i, 2j), und bei Empfang der vom designierten Router gesendeten Mitteilung LS Update, vergleicht die in der Mitteilung LS Update enthaltenen Informationen mit dem Inhalt seiner Datenbank und überträgt in Multicast an alle anderen Router des Netzes den Inhalt seiner Datenbank in Form einer weiteren Mittelung LS Update, um die Gesamtheit seiner Nachbarn zu synchronisieren, und der designierte Router quittiert diese weitere Mitteilung.

2. Verfahren nach Anspruch 1, **dadurch gekennzeichnet, dass** der designierte Router nach dem Schritt der Synchronisation der Gesamtheit der Nachbarn die lokalen Informationen an die Netze außerhalb seines eigenen überträgt.

3. Verfahren nach Anspruch 1, **dadurch gekennzeichnet, dass** die Hello-Mitteilung periodisch übertragen wird.

4. Verfahren nach Anspruch 1, **dadurch gekennzeichnet, dass** ein Router nach der Entdeckung seiner Nachbarn eine Mitteilung LS Request in Unicast an den designierten Router sendet, wobei die Mitteilung in Abwesenheit einer Antwort nach einer gegebenen Verzögerung Retransmission Interval wiederholt wird.

5. Verfahren nach einem der Ansprüche 1 bis 4, **dadurch gekennzeichnet, dass** es die Quittierung aller Mitteilungen durch den designierten Router und die Rückübertragung der nicht quittierten Mitteilungen und/oder bei Anwesenheit einer Folgenummer in allen Mitteilungen LS Update enthält.

6. Verfahren nach einem der Ansprüche 1 bis 5, **dadurch gekennzeichnet, dass** das Funknetz vom Typ Diffusionsnetz, NBMA oder auch Punkt-zu-Multipunkt-Netz ist.
